# EUROPÄISCHE PATENTSCHRIFT

(11) **EP 2 282 036 B1**
(45) Veröffentlichungstag und Bekanntmachung des Hinweises auf die Patenterteilung: **08.10.2014**
(21) Anmeldenummer: 10180370.8
(22) Anmeldetag: 17.03.2005
(51) Int. Cl.: F02D 41/00, F02B 37/24, F02B 37/22

(54) **Verfahren und Vorrichtung zur Motorsteuerung bei einem Kraftfahrzeug**
Method and device for engine control in a vehicle
Procédé et dispositif de commande d'un moteur à combustion interne dans un véhicule

(30) Priorität: 17.12.2004 DE 102004061454
(43) Veröffentlichungstag der Anmeldung: 09.02.2011
(62) Teilanmeldung aus: 05251627.5
(73) Patentinhaber: Delphi International Operations Luxembourg S.à r.l., 4940 Bascharage (LU)
(72) Erfinder: Schreurs, Bart, 6700 Arlon (BE)
(74) Vertreter: Neill, Andrew Peter

(56) Entgegenhaltungen:
- EP-A2- 1 024 261
- WO-A1-00/20746
- US-A- 6 035 639

## Beschreibung

Die Erfindung betrifft ein Verfahren zur Motorsteuerung nach dem Oberbegriff des Anspruchs 1 (EP 1 024 261 A2) sowie eine nach dem Verfahren arbeitende Vorrichtung, z.B. eine Motorelektronik in der das Verfahren implementiert ist. Konkret bezieht sich das Verfahren auf eine Regelung des Luft/Kraftstoff Gemisches (Air/Fuel Ratio = AFR).

Bekannt ist, bei Verbrennungsmotoren, namentlich bei Dieselmotoren, mit den Abgasen eine Turbine anzutreiben, die wiederum, z.B. über eine gemeinsame Achse, einen Kompressor antreibt, der komprimierte Frischluft in den Verbrennungsmotor, im Folgenden häufig kurz nur als Motor bezeichnet, fördert.

In erster Näherung ist das vom Kompressor abgegebene Luftvolumen proportional zur Drehzahl der Turbine, welche wiederum proportional zur abgegebenen Abgasmenge und damit proportional zur Drehzahl des Motors ist. Wünschenswert wäre aber, den durch den Kompressor zu erzielenden Leistungsgewinn für den Motor über dessen gesamten Drehzahlbereich gleichmäßig zur Verfügung zu haben. In diesem Zusammenhang sind Turbinen mit variabler Geometrie (Variable Geometry Turbine = VGT), im Folgenden kurz als VGT bezeichnet, bekannt geworden. Bei solchen VGT wird die Geometrie z.B. bei geringen Abgasmengen derart angepasst dass ausreichend Energie von der Turbine zum Antrieb des Kompressors zur Verfügung steht, so dass dieser das erforderliche Luftvolumen liefern kann.

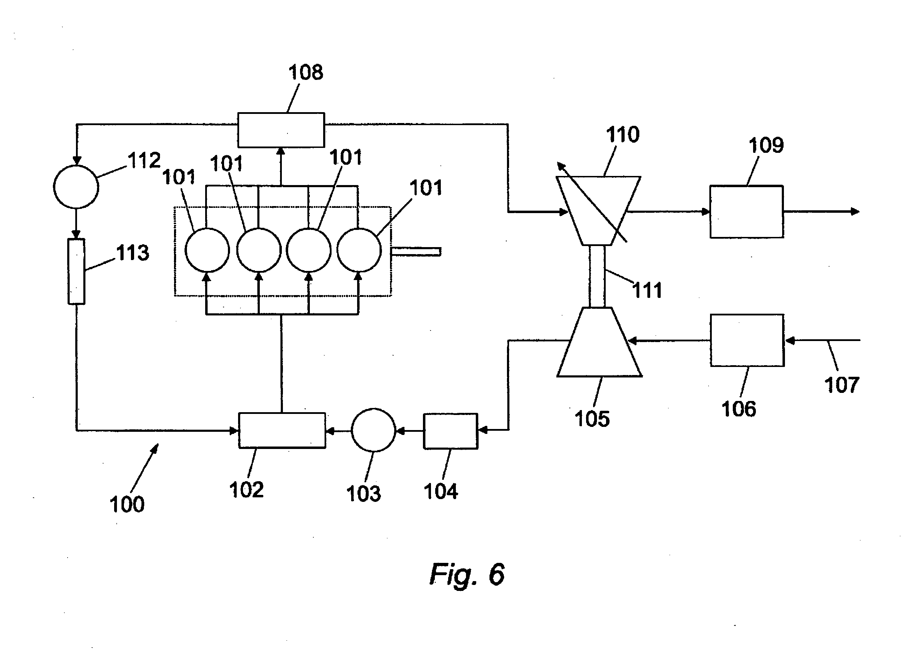

Fig. 6 zeigt ein schematisch vereinfachtes Blockschaltbild eines Verbrennungsmotors 100 am Beispiel eines Dieselmotors, wobei der Motorblock nur durch vier schematisch angedeutete Zylinder 101 dargestellt ist.

Dem Motorblock in Richtung des Massenflusses stromaufwärts vorgelagert ist ein Einlasskrümmer 102 (intake manifold), eine Drosselklappe 103 (throttle) und ein Frischluftkühler 104 (inter-cooler). Daran schließt sich ein Kompressor 105 und ein Luftfilter 106 an. Am Eingang des Luftfilters 106 befindet sich ein Frischlufteinlass 107. Entsprechend sind dem Motorblock in Richtung des Massenflusses stromabwärts nachgelagert ein Auslasskrümmer 108 (exhaust manifold) und in Richtung des Auspuffs 109 (exhaust line) noch eine Turbine, insbesondere eine Turbine mit variabler Geometrie 110 (VGT = variable geometry turbine), die vom Abgas angetrieben wird und mit dem Kompressor 105 z.B. über eine gemeinsame Welle 111 zu dessen Antrieb verbunden ist. Zur Abgasrückführung ist zumindest ein Teil des Abgases vom Auslasskrümmer 108 über ein EGR Ventil 112 (EGR = exhaust gas recirculation) und einen EGR Kühler 113 zum Einlasskrümmer 102 und damit in den Motor rückführbar.

Es ist damit eine Aufgabe der Erfindung, ein Verfahren zur Motorsteuerung anzugeben, mit dem sich die Turbine mit variabler Geometrie (VGT) hinsichtlich der Geometrieveränderung derart steuern oder regeln lässt, dass stets das geforderte Luft/ Kraftstoff Gemisch zur Verfügung steht und damit der Motor stets in einem optimalen Leistungsbereich mit minimalem Schadstoffausstoß arbeitet.

Diese Aufgabe wird hinsichtlich des Verfahrens mit den Merkmalen des Anspruchs 1 gelöst. Hinsichtlich der Vorrichtung wird die Aufgabe mit einer nach dem Verfahren arbeitenden Vorrichtung gelöst, z.B. einer Motorsteuerung, in der das Verfahren elektronisch, als Software oder in einer Mischform, also teilweise elektronisch und teilweise in Software implementiert ist.

Weiter besteht eine Aufgabe der Erfindung darin, ein zusammen mit der erfindungsgemäßen Regelung oder anderen ggf. möglichen Regelungen verwendbares Verfahren sowie eine nach dem Verfahren arbeitende Vorrichtung anzugeben, mit dem sich verhindern lässt, dass durch den Kompressor mehr Luft in den Motor gefördert wird, als dieser verarbeiten kann. Ein Zuviel an eingangsseitiger Luftmasse kann nämlich zu einem Zusammenbruch des Massenstroms durch den Motor führen. Dies kann z.B. dann der Fall sein, wenn aufgrund einer vom Kompressor eigentlich benötigten Luftmenge oder Luftmasse die Geometrie der Turbine entsprechend angepasst wird, was aber zu einer Druckerhöhung am Ausgang des Motors führt. Durch die vom Kompressor gelieferte Luftmasse steigt zwar auch der Druck am Eingang des Motors. Der eingangsseitige Druckanstieg ist aber möglicherweise geringer als der durch die Geometrieänderung der Turbine und die damit einhergehende Änderung des effektiven Querschnitts der Turbine bewirkte ausgangsseitige Druckanstieg. Wenn die Differenz des ein- und ausgangsseitigen Druckanstiegs bestimmte, im Wesentlichen motorspezifische Schwellwerte überschreitet, kann die vom Kompressor gelieferte Luftmasse, die in geeigneter Relation zum zugeführten Kraftstoff steht, nicht mehr in oder durch den Motor geführt werden. Damit kann es zu dem Effekt kommen, dass für eine hinsichtlich Energieausnutzung und Schadstoffminimierung optimale Verbrennung des Kraftstoffs nicht genug Sauerstoff zur Verfügung steht. Die Verbrennung des Kraftstoffs erfolgt also ggf. nur suboptimal. Zum anderen kann es dazu kommen, dass der Massenfluss durch den Motor einbricht, weil das Verhältnis zwischen eingangsseitig zugeführten Massen und ausgangsseitig abgeführten Massen und der damit bedingten ein- und ausgangsseitigen Druckverhältnisse nicht mehr stimmt.

Die Erfindung löst dieses Problem mit einem Verfahren zur Beschränkung der Änderung der Geometrie oder des effektiven Querschnitts der Turbine der Turbine sowie einer nach dem Verfahren arbeitenden Vorrichtung, also z.B. wiederum einer Motorsteuerung, in der das Verfahren elektronisch, als Software oder in einer Mischform, also teilweise elektronisch und teilweise in Software implementiert ist.

Die abhängigen Ansprüche sind auf bevorzugte Ausführungsformen der vorliegenden Erfindung sowie Einzelaspekt der Erfindung und deren bevorzugte Ausführungsformen gerichtet.

Nachfolgend wird ein Ausführungsbeispiel der Erfindung sowie weitere bevorzugte Ausführungsformen anhand der Zeichnung näher erläutert. Einander entsprechende Gegenstände oder Elemente sind in allen Figuren mit den gleichen Bezugszeichen versehen.

Darin zeigen
- Fig. 1: ein vereinfachtes Blockschaltbild für eine VGT Steuerung,
- Fig. 2: eine exemplarische Darstellung eines Kompressorkennfeldes,
- Fig. 3: ein vereinfachtes Blockschaltbild für eine VGT Regelung,
- Fig. 4: ein vereinfachtes Blockschaltbild für eine um eine Begrenzung ergänzte VGT Regelung,
- Fig. 5: eine exemplarische Darstellung eines Turbinenkennfeldes und
- Fig. 6: ein schematisch vereinfachtes Blockschaltbild eines Verbrennungsmotors mit einer Turbine mit variabler Geometrie.

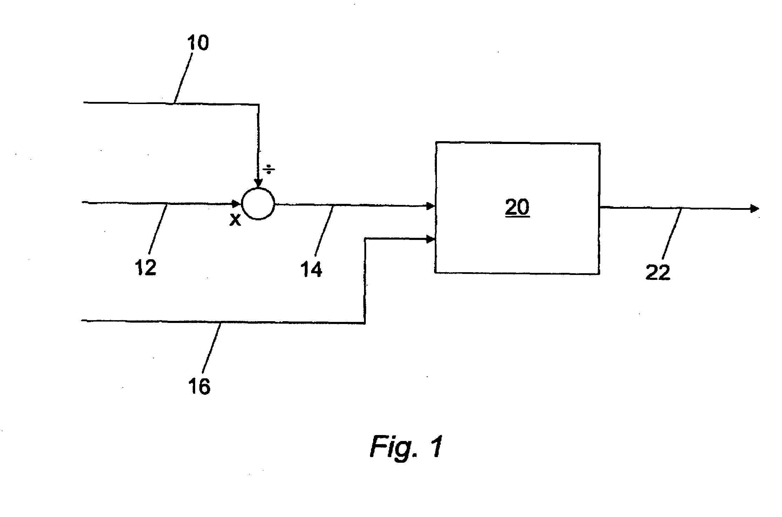

Fig. 1 zeigt ein vereinfachtes Blockschaltbild für eine Steuerung einer Turbine mit variabler Geometrie - "VGT-Steuerung". Die Turbine selbst wie auch der von dieser angetriebene Kompressor und schließlich der Verbrennungsmotor sind nicht gezeigt.

Als Eingangswerte werden der Steuerung zunächst der Umgebungsdruck 10 und der geforderte Kompressordruck (Sollkompressordruck 12) zugeführt. Durch Division ergibt sich aus diesen Eingangswerten 10, 12 ein gefordertes Kompressionsverhältnis (Sollkompressionsverhältnis 14), das dem Verhältnis zwischen dem Druck am Eingang und am Ausgang des Kompressors entspricht. Zur weiteren Optimierung des Verfahrens ist es möglich, in dem Eingangswert Umgebungsdruck 10 auch noch den Druckabfall in der Ansaugleitung zu berücksichtigen. Der Eingangswert Umgebungsdruck 10 entspricht dann dem tatsächlichen Umgebungsluftdruck abzüglich dem Druckverlust in der Ansaugleitung.

Als weiterer Eingangswert wird der Steuerung ein Maß für den Massenfluss 16, nämlich eine ggf. geeignet gewichtete Summe aus Luftmassenfluss im Kompressor und Kraftstofffluss, d.h. insbesondere Kraftstofffluss in den Motor, zugeführt.

Die oben beschriebenen Eingangswerte 14, 16 werden in einer VGT Positionsberechnung 20 verarbeitet und es wird eine VGT Position 22 ausgegeben, die einem nicht dargestellten Stellglied zur Veränderung der Geometrie der VGT zugeführt werden kann. Die Veränderung der Geometrie oder des effektiven Querschnitts der VGT 110 erfolgt bevorzugt durch Verstellung von Leitschaufeln oder dergleichen, sog. "vanes", die um das Turbinenrad herum angeordnet sind. Die Leitschaufeln sind drehbar gelagert und können zwischen Stellungen wie "geschlossen" und "geöffnet" kontinuierlich oder zumindest im Wesentlichen kontinuierlich verstellt werden. Zur Ansteuerung des Stellgliedes wird bevorzugt als VGT Position 22 ein Prozentwert hinsichtlich des Öffnungs- oder Schließungszustandes abgegeben. Eine VGT Position 22 von "30 %" bedeutet also z.B. "30 % geschlossen". Sämtliche Leitbleche der VGT 110 werden daraufhin in die entsprechende Position gebracht.

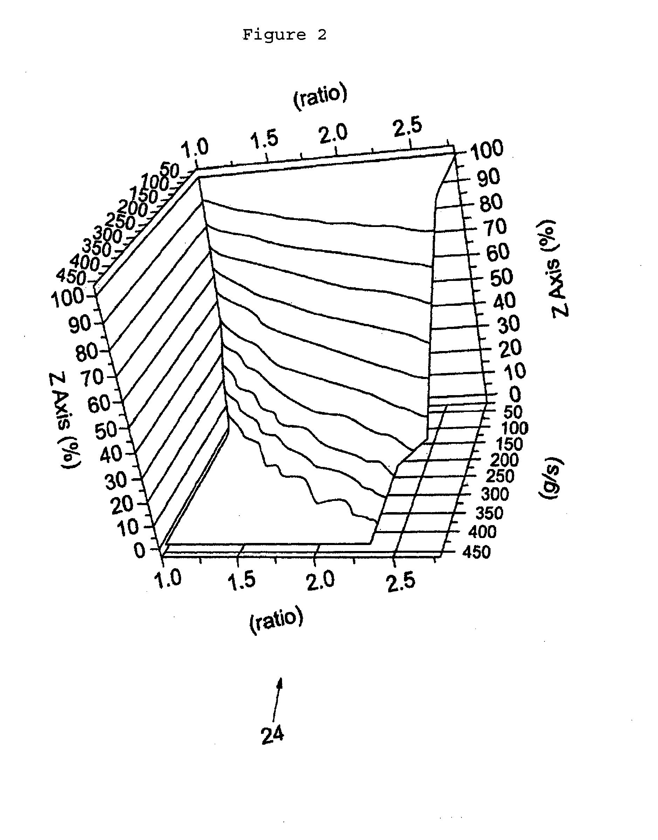

Die Ableitung der VGT Position 22 erfolgt mittels der VGT Positionsberechnung 20 im Wesentlichen anhand eines exemplarisch in Fig. 2 dargestellten Kennlinienfeldes, das zur Referenzierung als Kompressorkennfeld 24 bezeichnet wird, oder einer Schar entsprechender Kennlinienfelder. Bei dem Kompressorkennfeld 24 handelt es sich um ein dreidimensionales Kennfeld. Auf der mit "ratio" bezeichneten x-Achse ist ein Kompressionsverhältnis abgetragen. Auf der mit "g/ s" bezeichneten y-Achse ist ein Massenstrom abgetragen. Auf der mit "Z Axis" bezeichneten z-Achse ist schließlich in Prozent eine Positionsinformation für die VGT 110 abgetragen. Mit dem über der x-Achse abgetragenen ersten Eingangswert hinsichtlich des Sollkompressionsverhältnisses 14 und dem über der y-Achse abgetragenen zweiten Eingangswert hinsichtlich des Massenflusses 16 lässt sich auf der z-Achse direkt die Positionsinformation oder zumindest ein Maß für die Positionsinformation zur Generierung der VGT Position 22 ablesen. Mit der Ansteuerung des Stellgliedes für die VGT 110 ist die VGT-Steuerung abgeschlossen.

Im Weiteren wird eine Weiterbildung der VGT-Steuerung zu einer VGT-Regelung mit selbständiger erfinderischer Qualität beschrieben.

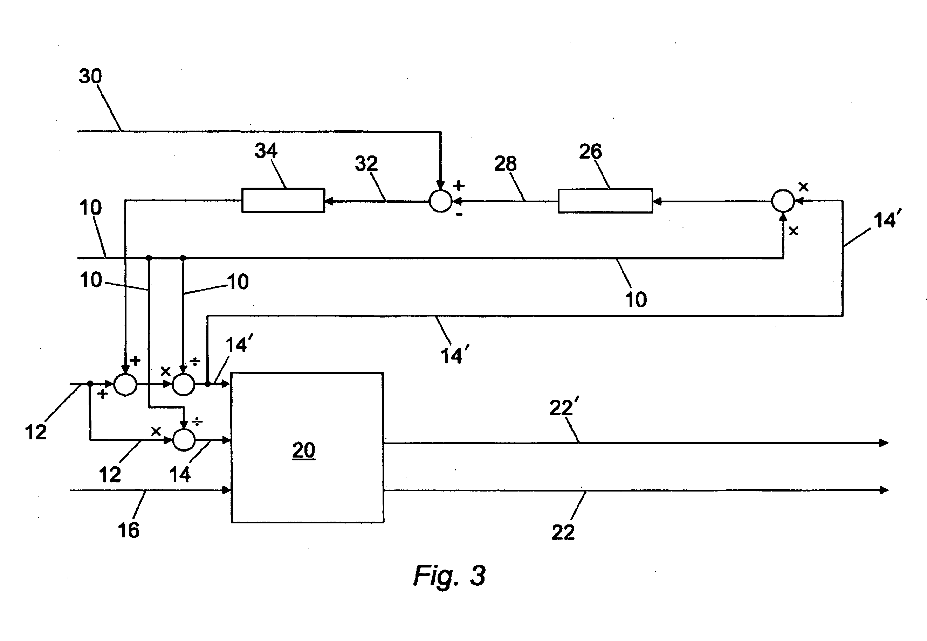

Fig. 3 zeigt dazu ein schematisch vereinfachtes Blockschaltbild der VGT-Regelung, wobei die bereits im Zusammenhang mit Fig. 1 erläuterten Element nicht erneut beschrieben werden.

Für die VGT-Regelung ist ein weiterer Eingang für die VGT Positionsberechnung 20 gezeigt. Der Eingangswert resultiert im Wesentlichen aus einer Division der Eingangswerte Umgebungsdruck 10 und Sollkompressordruck 12 wie bei der VGT-Steuerung und stellt entsprechend ein Sollkompressionsverhältnis dar. Zur Unterscheidung vom Sollkompressionsverhältnis 14 im "Steuerungszweig" wird das entsprechende Sollkompressionsverhältnis im Regelungszweig als Regelungssollkompressionsverhältnis 14' bezeichnet. Die zusätzliche Berücksichtigung des mit der Rückkopplung auf den Eingang der Regelung zurückgeführten Korrekturwertes wird im weiteren Verlauf der Beschreibung erläutert.

Am Ausgang der VGT Positionsberechnung 20 steht wieder die VGT Position 22 aufgrund der Steuerung, wie zuvor erläutert, und nunmehr zusätzlich eine geregelte VGT Position 22' zur Verfügung. Die geregelte VGT Position 22' wird dem erneut nicht dargestellten Stellglied für die VGT 110 zugeführt. Bei intakter VGT Regelung wird die aus der VGT Steuerung resultierende VGT Position 22 selbstverständlich dem Stellglied für die VGT 110 nicht mehr zugeführt. Für den gesamten Aspekt der VGT Regelung gilt, dass die Signalpfade, die sich nur auf die VGT Steuerung beziehen, entbehrlich sind. Es kann jedoch günstig sein, bei der Implementierung des erfindungsgemäßen Verfahrens die VGT Steuerung und die VGT Regelung parallel zu implementieren, so dass z.B. im Falle eines Ausfalls der VGT Regelung jederzeit auf die VGT Steuerung zurückgegriffen werden kann.

Für die Regelung wird nun das Regelungssollkompressionsverhältnis 14' als Eingang für den Rückkopplungszweig verwendet. Durch Multiplikation mit dem Umgebungsdruck 10 ergibt sich der momentan anstehende Kompressordruck, der als Eingangssignal einem Filter 26 zugeführt wird. Das Filter 26 ist bevorzugt ein Verzögerungsglied erster Ordnung (first order lag and delay) zur Nachbildung der Dynamik des Kompressors. Der Filter 26 fungiert als Beobachter. Der Ausgang des Filters 26 entspricht damit einem modellierten Kompressordruck 28 und wird von einem den tatsächlichen Kompressordruck 30 repräsentierenden Messwert subtrahiert. Die Differenz dieser beiden Werte wird im Folgenden zur Referenzierung als Kompressorfehler 32 bezeichnet. Der Kompressorfehler 32 ergibt sich im Wesentlichen aus unvermeidlichen Fehlern im empirisch ermittelten Kompressorkennfeld 24, das die tatsächlichen Verhältnisse niemals exakt abbilden kann. Diesen verbleibenden Fehler in der Modellierung des Systems, nämlich mit dem Kompressorkennfeld 24, gleicht man gemäß der Erfindung damit aus, dass der Kompressorfehler 32 auf den Eingang der Regelung zurückgeführt wird. Allerdings erfolgt dies gemäß einem weiteren selbständig erfinderischen Aspekt nicht direkt sondern indirekt über einen zwischengeschalteten Regler 34, der insbesondere als PI-Regler ausgeführt ist.

Die selbstständige erfinderische Qualität ergibt sich zum einen daraus, dass es unüblich ist, einen Regler im Rückkopplungszweig einer Regelung vorzusehen. Zum anderen wäre es zwar möglich, den Ausgang des Reglers 34 direkt zu verwenden um die Ansteuerung des Stellglieds zur Justierung der VGT 110 zu verbessern. Das würde aber eine Anpassung der Reglerparameter an die jeweilige Betriebssituation, also z.B. den Gang der mittels des Getriebes momentan ausgewählt ist, usw., erfordern. Darüber hinaus läge ein nichtlineares System vor, das entsprechend einen nichtlinearen Regler oder eine Mehrzahl linearer Regler für einzelne linearisierte Betriebssituationen erfordern würde. Schließlich ergäbe sich noch die Problematik, dass ein Regler für eine direkte Ansteuerung des Stellgliedes für eine besonders hohe Dynamik ausgelegt werden müsste. Das Problem hinsichtlich der erhöhten Dynamik kann man sich leicht verdeutlichen, wenn man als Eingangssignal 12 eine Sprungfunktion annimmt. Aufgrund der Trägheit des Kompressors ist die Sprungantwort selbst keine Sprungfunktion. Der tatsächliche Kompressordruck 30 steigt also nur langsam, z.B. wie beim Aufladen eines Kondensators in einem RC-Glied an. Der Fehler zwischen einer solchen "Ladekurve" und einer Sprungfunktion ist besonders direkt nach dem Sprung sehr groß, so dass ein Regler über eine entsprechende Dynamik verfügen müsste um solche Fehler auszuregeln. Bei der erfindungsgemäß gewählten Position des Reglers ergeben sich jedoch andere Verhältnisse. Als Eingang für den Regler 34 ergibt sich hier die Differenz zwischen Ausgang des Beobachters 26 und tatsächlichem Kompressordruck 30. Beide Werte steigen auch bei einer Sprungfunktion am Eingang 12 der Regelung kontinuierlich, nämlich einmal entsprechend der tatsächlichen Trägheit des Kompressors (tatsächlicher Kompressordruck 30) und einmal entsprechend der Trägheit des Kompressormodells, nämlich dem Filter 26 (modellierter Kompressordruck 28) an. Die Differenz zwischen diesen beiden Werten ist stets klein, insbesondere klein gegenüber einer zum Vergleich herangezogenen Differenz zwischen einer Sprungfunktion und dem tatsächlichen Kompressordruck 30. Die Anforderungen an die Dynamik des Reglers 34 sind bei der erfindungsgemäß gewählten Verschaltung also erheblich reduziert. Zudem ist, die Gefahr Unerwünschten Überschwingens oder gar Instabilität aufgrund der Regelung reduziert, wenn nicht gar ausgeschlossen, weil der Regler stets nur vergleichsweise geringe Fehler ausregeln muss.

Alle diese Probleme können durch die Erkenntnis der Erfindung vermieden werden, indem der Regler im Rückkopplungszweig vorgesehen wird. Der rückgekoppelte Fehler, der Kompressorfehler 32 wird dann zusammen mit dem Sollkompressordruck 12 wieder der Verarbeitung in der VGT Positionsberechnung 20 unterzogen, was eine "Quasi-Linearisierung" des Systems zur Folge hat. Der vom Regler 34 gelieferte Wert wird durch die zusätzliche (additive) Berücksichtigung des Sollkompressordrucks 12 und der sonstigen Eingangswerte 10, 16, die den "Arbeitspunkt" im Kompressorkennfeld 24 bestimmen, automatisch "an die richtige Position im Kompressorkennfeld 24 verschoben", so dass aus der sich damit insgesamt ergebenden Position im Kompressorkennfeld 24 die resultierende geregelte VGT Position 22' zur Ansteuerung des VGT Stellgliedes ermittelt werden kann.

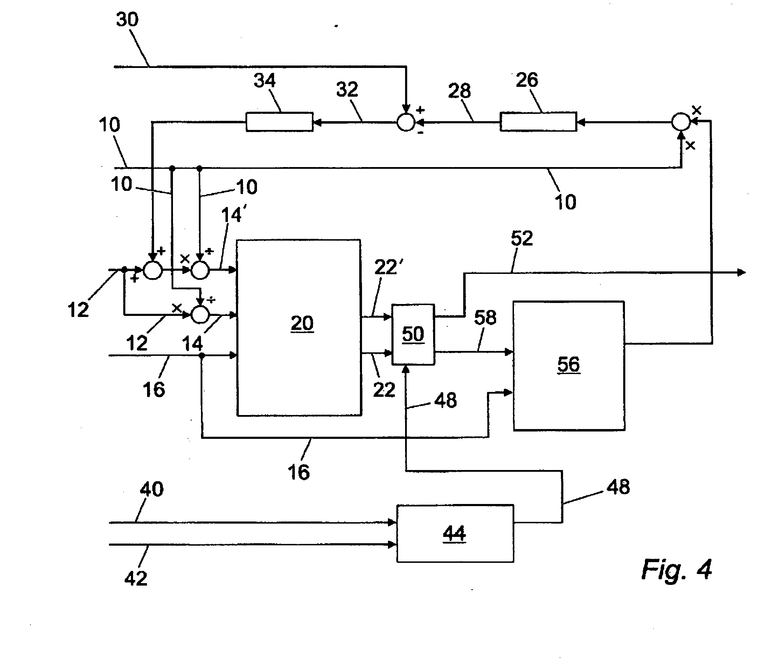

Bei bestimmten Konstellationen kann es vorkommen, dass sich aufgrund der Regelung eine Stellung für die VGT 110 ergeben würde, bei der der Kompressor ein Luftvolumen zum Motor führt, das tatsächlich nicht durch den Motor geführt werden kann, weil das Verhältnis aus ein- und ausgangseitigem Druck bestimmte motorspezifische Schwellwerte überschreitet. Dann droht ein Zusammenbruch des Massenstroms (Luft, Kraftstoff) durch den Motor. Um dies stets sicher zu vermeiden ist gemäss einem weiteren Aspekt der Erfindung mit selbständiger erfinderischer Qualität eine Grenzwertberücksichtigung vorgesehen, die im Folgenden anhand von Fig. 4 näher erläutert wird.

Für die Grenzwertberücksichtigung werden zwei weitere Eingangswerte verwendet, nämlich zum einen ein maximales Turbinendruckverhältnis 40 und zum anderen ein weiteres Massenflussmaß 42. Dabei ergibt sich das Turbinendruckverhältnis 40 aus einem maximalen Motordruckverhältnis, nämlich dem maximalen Verhältnis aus eingangs- und ausgangsseitigem Druck direkt am Ein- und Auslass des Motors, und dem tatsächlichen Kompressordruck 30. Das Produkt dieser Werte wird durch den Umgebungsdruck 10, ggf. mit Berücksichtigung einer Druckzunahme in der Abgasleitung, dividiert. Der Quotient stellt insgesamt das maximale Turbinendruckverhältnis 40 dar. Das maximale Motordruckverhältnis ist eine motorspezifische Konstante. Übliche Werte für diese Konstante liegen im Bereich von "1,6" bis "1,7". Anstelle einer Konstante ist es hier auch möglich, Werte zu verwenden, die in Ansehung der jeweils aktuellen Druckverhältnisse einen Einbruch des Massenstromes durch den Motor um z.B. nicht mehr als 10% bewirken. Solche Werte sind aus Kurven ermittelbar, die Aussagen über die volumetrische Effizienz (volumetric efficiency) des jeweiligen Motors gestatten. Zum Ersetzen der Konstante ist also lediglich das Ablegen von Daten hinsichtlich dieser volumetrischen Effizienz und deren geeignete Auswertung erforderlich. Das weitere Massenflussmaß 42 ist eine ggf. geeignet gewichtete Summe aus dem Luftmassenfluss in der Turbine und dem aktuellen Kraftstofffluss.

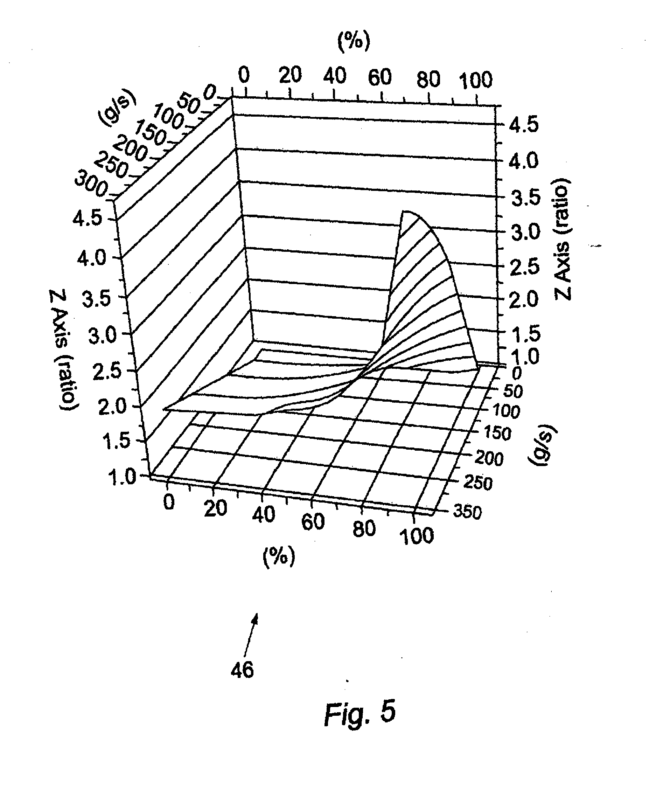

Beide Eingangswerte 40, 42 werden in einer VGT Grenzwertberechnung 44 verarbeitet. Die VGT Grenzwertberechnung 44 erfolgt, ähnlich wie der VGT Positionsberechnung 20, im Wesentlichen anhand eines exemplarisch in Fig. 5 dargestellten Kennlinienfeldes, das zur Referenzierung als Turbinenkennfeld 46 bezeichnet wird, oder einer Schar entsprechender Kennlinienfelder. Bei dem Turbinenkennfeld 46 handelt es sich wieder um ein dreidimensionales Kennfeld. Auf der mit "%" bezeichneten x-Achse ist ein Öffnungs-oder Schließungsverhältnis der Leitbleche oder äquivalenter Elemente in der VGT 110 abgetragen. Auf der mit "g/ s" bezeichneten y-Achse ist ein Massenstrom abgetragen. Auf der mit "Z Axis (ratio)" bezeichneten z-Achse ist schließlich ein Turbinendruckverhältnis abgetragen. Mit dem über der z-Achse abgetragenen ersten Eingangswert hinsichtlich des maximalen Turbinendruckverhältnisses 40 und dem über der y-Achse abgetragenen zweiten Eingangswert hinsichtlich des Massenflusses 42 lässt sich auf der x-Achse direkt die maximal mögliche VGT Position, d.h. das maximal mögliche Öffnungs- und Schließungsverhältnis der Leitbleche oder dergleichen ablesen. Der Ausgang der VGT Grenzwertberechnung 44 wird als VGT Grenzwert 48 einem VGT Begrenzer 50 zugeführt. Der VGT Begrenzer hat die Wirkung, dass Eingangswerte 22, 22', also VGT Positionen 22, 22', die im Zusammenhang mit der nachfolgenden evtl. Begrenzung als geforderte VGT Position 22, 22' bezeichnet werden, welche oberhalb des VGT Grenzwertes 48 liegen, genau auf den Wert des VGT Grenzwertes beschränkt werden. Zur Ansteuerung des VGT Stellgliedes kann grundsätzlich entweder ein auf der gesteuerten oder geregelten geforderten VGT Position 22, 22' beruhender, ggf. begrenzter VGT Positionswert 52 verwendet werden. Gezeigt ist die Konstellation, bei der der begrenzte VGT Positionswert 52 auf der geregelten VGT Position 22 basiert.

Für die Regelung wird nun abweichend von der zuvor im Zusammenhang mit Fig. 3 erläuterten Konstellation nicht das Regelungssollkompressionsverhältnis 14' berücksichtigt, das evtl. Begrenzungen außer Acht lassen würde, sondern es wird ein geschätztes Kompressionsverhältnis 54 verwendet, dass sich z.B. aus "inverser Anwendung" des Kompressorkennfeldes 24 ergibt. Die Ermittlung des geschätzten Kompressionsverhältnisses 54 erfolgt mittels einer Schätzwertermittlung 56. Die Schätzwertermittlung erfolgt bevorzugt durch nochmalige Verwendung des bereits bei der VGT Positionsberechnung 20 verwendeten und damit in der Motorsteuerung oder jeder sonstigen Plattform zur Implementation des erfindungsgemäßen Verfahrens vorhandenen Kompressorkennfeldes 24. Eingänge für die Schätzwertermittlung 56 sind ein auf der gesteuerten VGT Position 22 beruhender Ausgang des VGT Begrenzers 50, der im Folgenden zur Referenzierung als begrenzter VGT Steuerungspositionswert 58 bezeichnet wird, und das Maß für den Massenflusses 16, das auch als Eingang für die VGT Positionsberechnung 20 verwendet wird. Im Kompressorkennfeld 24 (vgl. Fig. 2) werden nun die beiden Eingangswerte 16, 58 über der y-Achse und z-Achse abgetragen und auf der x-Achse des zugehörige Kompressionsverhältnis als geschätztes Kompressionsverhältnis 54 abgelesen. Das geschätzte Kompressionsverhältnis 54 wird wie bei der im Zusammenhang mit Fig. 3 erläuterten Konstellation das Regelungssollkompressionsverhältnis 14' in den Rückkopplungszweig für die Regelung geführt. Die Funktionalität des Rückkopplungszweigs entspricht der bereits im Zusammenhang mit Fig. 3 erläuterten Funktionalität. Die Verwendung des begrenzten VGT Steuerungspositionswert 58 anstelle des anderen Ausgangs des VGT Begrenzers 50, nämlich des begrenzter VGT Positionswerts 52, dass der bei der Steuerung unvermeidliche Restfehler gerade die Grundlage für die Regelung bildet. Bei Verwendung des bereits auf der Regelung beruhenden begrenzten VGT Positionswertes würde, sofern keine Begrenzung auf den VGT Grenzwert 48 erfolgt ist, das geschätzte Kompressionsverhältnis 54 exakt dem Sollkompressionsverhältnis 14 entsprechen, so dass die Schätzwertermittlung 56 und die nochmalige Auswertung des Kompressorkennfeldes 24 überflüssig wäre.

Die vorstehend beschriebene Begrenzung, also die Funktionalität der Funktionsblöcke 44, 50, 56 (VGT Grenzwertberechnung 44, VGT Begrenzer 50 und Schätzwertermittlung 56) ist unabhängig von der zugrunde liegenden Regelung und kann z.B. auch mit einer abweichend von der erfindungsgemäßen Regelung, wie im Zusammenhang mit Fig. 3 erläutert, realisierten Regelung eingesetzt werden.

Damit lässt sich die Erfindung kurz wie folgt darstellen:
Es wird ein Verfahren und eine nach dem Verfahren arbeitende Vorrichtung zur Motorsteuerung bei einem Kraftfahrzeug, insbesondere Verfahren zur Steuerung eines Verbrennungsmotors - Motorsteuerung - bei einem Kraftfahrzeug, nämlich zur optimalen Einstellung eines Luft/Kraftstoffverhältnisses, angegeben, bei dem/bei der sich das Luft/ Kraftstoffverhältnis aus dem Verhältnis einer in den Motor eingeführten Luftmasse und einer in den Motor eingeführten Kraftstoffmasse ergibt, wobei die Luftmasse durch einen von einer Turbine mit variabler Geometrie angetriebenen Kompressor beeinflusst wird und wobei eine vom Kompressor gelieferte Luftmasse von einer Energieabgabe der Turbine abhängt, die wiederum vom Abgas des Verbrennungsmotors angetrieben wird, wobei gemäß einem Hauptaspekt der Erfindung vorgesehen ist dass die variable Geometrie der Turbine in Abhängigkeit von einer aufgrund eines zugrunde liegenden, momentan erforderlichen Luft/Kraftstoffverhältnisses geforderten Luftmasse vom Kompressor - Sollkompressordruck 12 - gesteuert und/oder geregelt wird und wobei gemäß zumindest einem weiteren Hauptaspekt der Erfindung vorgesehen ist, dass die Anpassung der Geometrie der Turbine in Abhängigkeit vom möglichen Massenfluss durch den Motor erforderlichenfalls beschränkt wird.

### Bezugszeichenliste

- 10: Umgebungsdruck
- 12: Sollkompressordruck
- 14: Sollkompressionsverhältnis
- 16: Massenfluss
- 20: VGT Positionsberechnung
- 22: VGT Position
- 24: Kompressorkennfeld
- 26: Filter
- 28: modellierter Kompressordruck
- 30: tatsächlicher Kompressordruck
- 32: Kompressorfehler
- 34: Regler
- 40: Turbinendruckverhältnis
- 42: Massenflussmaß
- 44: VGT Grenzwertberechnung
- 46: Turbinenkennfeld
- 48: VGT Grenzwert
- 50: VGT Begrenzer
- 52: VGT Positionswert
- 54: Kompressionsverhältnis
- 56: Schätzwertermittlung
- 58: VGT Steuerungspositionswert
- 100: Verbrennungsmotor
- 101: Zylinder
- 102: Einlasskrümmer
- 103: Drosselklappe
- 104: Frischluftkühle
- 105: Kompressor
- 106: Luftfilter
- 107: Frischlufteinlass
- 108: Auslasskrümmer
- 109: Auspuff
- 110: Turbine mit variabler Geometrie (VGT)
- 111: Welle
- 112: EGR Ventil
- 113: EGR Kühler

## Patentansprüche

1. Verfahren zur Motorsteuerung bei einem Kraftfahrzeug, insbesondere Verfahren zur Steuerung eines Verbrennungsmotors - Motorsteuerung - bei einem Kraftfahrzeug, nämlich zur optimalen Einstellung eines Luft/Kraftstoffverhältnisses, wobei sich das Luft/Kraftstoffverhältnis aus dem Verhältnis einer in den Motor eingeführten Luftmasse und einer in den Motor eingeführten Kraftstoffmasse ergibt,
wobei die Luftmasse durch einen von einer Turbine mit variabler Geometrie angetriebenen Kompressor beeinflusst wird und wobei eine vom Kompressor gelieferte Luftmasse von einer Energieabgabe der Turbine abhängt, die wiederum vom Abgas des Verbrennungsmotors angetrieben wird,
dass die Anpassung der Geometrie der Turbine in Abhängigkeit vom möglichen Massenfluss durch den Motor erforderlichenfalls beschränkt wird,
**dadurch gekennzeichnet, dass**
eine Beschränkung der Anpassung der Geometrie der Turbine auf einer Auswertung eines Turbinenkennfeldes (46) erfolgt,
wobei anhand der Auswertung des Turbinenkennfeldes (46) ein Grenzwert (48) abgeleitet wird,
der als Maximalwert für einem bei Auswertung des Kompressorkennfeldes (24) ermittelten Sollwert (22, 22') für die Anpassung der Geometrie der Turbine fungiert.

2. Verfahren nach Anspruch 1,
wobei aus einem ggf. durch den Grenzwert (48) beschränkten Sollwert (22, 22') durch nochmalige geeignete Auswertung des Kompressorkennfeldes (24) ein geschätztes Kompressionsverhältnis (54) abgeleitet wird, das, insbesondere anstelle des Regelungssollkompressionsverhältnisses (14'), als Eingang dem Rückkopplungszweig für die Regelung zugeführt wird.

3. Vorrichtung zur Steuerung eines Verbrennungsmotors bei einem Kraftfahrzeug, nämlich zur optimalen Einstellung eines Luft/Kraftstoffverhältnisses,
**dadurch gekennzeichnet, dass**
die Vorrichtung nach einem Verfahren gemäß einem oder mehreren der vorangehenden Ansprüche arbeitet und/oder dass die Vorrichtung eine Implementation des Verfahrens gemäß einem oder mehreren der vorangehenden Ansprüche umfasst.

## Claims

1. Method for engine control in a motor vehicle, in particular method for the control of an internal combustion engine - engine control - in a motor vehicle, namely for optimum adjustment of an air-to-fuel ratio, wherein the air-to-fuel ratio results from the ratio of an air mass introduced into the engine and a fuel mass introduced into the engine,
wherein the air mass is affected by a compressor driven by a turbine with variable geometry and
wherein an air mass delivered by the compressor depends on an energy output of the turbine which is in turn driven by the exhaust gas of the internal combustion engine, and adaptation of the geometry of the turbine is if necessary restricted as a function of the possible mass flow through the engine,
**characterised in that** restriction of adaptation of the geometry of the turbine is effected on an evaluation of a turbine characteristic diagram (46), wherein a limit value (48) is derived with the aid of the evaluation of the turbine characteristic diagram (46), which limit value acts as the maximum value for a nominal value (22, 22') for adaptation of the geometry of the turbine, which nominal value is determined upon evaluation of the compressor characteristic diagram (24).

2. Method according to claim 1, wherein from a nominal value (22, 22') which if occasion arises is restricted by the limit value (48) is derived, by suitable evaluation of the compressor characteristic diagram (24) again, an estimated compression ratio (54) which, in particular instead of the regulation nominal compression ratio (14'), is delivered as the input to the feedback branch for regulation.

3. Apparatus for the control of an internal combustion engine in a motor vehicle, namely for optimum adjustment of an air-to-fuel ratio, **characterised in that** the apparatus works by a method according to one or more of the preceding claims and/or **in that** the apparatus encompasses implementation of the method according to one or more of the preceding claims.

## Revendications

1. Procédé pour la commande du moteur dans un véhicule automobile, en particulier procédé pour la commande d'un moteur à combustion interne dans un véhicule automobile, en particulier pour le réglage optimal d'un rapport air/carburant, dans lequel le rapport air/carburant résulte du rapport d'une masse d'air introduite dans le moteur sur une masse de carburant introduite dans le moteur,
dans lequel la masse d'air est influencée par un compresseur entraîné par une turbine à géométrie variable et
dans lequel une masse d'air fournie par le compresseur dépend d'une dépense d'énergie de la turbine, laquelle est à son tour entraînée par les gaz d'échappement du moteur à combustion interne,
et dans lequel l'adaptation de la géométrie de la turbine est limitée si nécessaire en fonction du débit massique possible à travers le moteur,
**caractérisé en ce que**
une limitation de l'adaptation de la géométrie de la turbine a lieu sur une évaluation d'un champ caractéristique de la turbine (46), de telle manière que l'on dérive une valeur limite (48) au moyen de l'évaluation du champ caractéristique de la turbine (46),
et cette valeur limite fait office de valeur maximum pour une valeur de consigne (22, 22'), déterminée lors de l'évaluation du champ caractéristique du compresseur (24), pour l'adaptation de la géométrie de la turbine.

2. Procédé selon la revendication 1,
dans lequel on dérive, à partir d'une valeur de consigne (22, 22') limitée le cas échéant par la valeur limite (48) et par évaluation répétée appropriée du champ caractéristique du compresseur (24), un rapport de compression estimé (54) qui est fourni à titre d'entrée à la branche de rétroaction pour la régulation, en particulier à la place du rapport de compression de consigne (14') pour la régulation.

3. Dispositif pour la commande d'un moteur à combustion interne dans un véhicule automobile, en particulier pour le réglage optimal d'un rapport air/carburant,
**caractérisé en ce que** le dispositif fonctionne selon un procédé d'après l'une ou plusieurs des revendications précédentes, et/ou **en ce que** le dispositif inclut une mise en oeuvre du procédé selon l'une ou plusieurs des revendications précédentes.
